# EUROPEAN PATENT APPLICATION

(11) **EP 1 690 663 A2**
(43) Date of publication of application: **16.08.2006**
(21) Application number: 06101514.5
(22) Date of filing: 10.02.2006
(51) Int. Cl.: B29C 44/12

(54) **Process for manufacturing a multi-element sponge and sponge thereby obtained**

(30) Priority: 10.02.2005 IT MI20050189
(71) Applicant: Martini S.p.A., 43058 Coenzo di Sorbolo (Parma) (IT)
(72) Inventor: MARTINI, Fulvio, 43058, COENZO DI SORBOLO (PR) (IT)
(74) Representative: Pesce, Michele

(57) **Abstract**

The process for manufacturing a multi-element sponge consists of mixing together a polymer (1) and a reagent (2) to form a mixture (3) to be expanded to produce a spongy mass (4), casting the mixture (3) in a mould (6), depositing an insert (7) onto said mixture (3) and allowing the mixture (3) to expand while maintaining the insert (7) pressed against it, so that on termination of expansion the insert (7) is directly connected to the spongy mass (4).

## Description

The present invention relates to a process for manufacturing a multi-element sponge and to a sponge obtained thereby.

Sponges of this type are widely available because they provide two surfaces presenting different characteristics.

Multi-element sponges are currently produced by preparing each element separately and then joining the two elements together.

The connection is made in various ways. For example the connection can be made by flame treatment (especially when one of the sponge elements is of polyester). With this method one of the elements (the polyester element) is surface-melted and the second element is attached to it.

Alternatively the connection can be made using adhesive, for example polyurethane adhesive, which is spread onto the surfaces of the elements to be joined together, these then being brought into mutual contact to form the connection.

This procedure clearly involves high costs and complications in making the connection (whether by flame treatment or by adhesive).

The costs and complications derive from the need for burner nozzles connected to fuel tanks or, alternatively, for tanks of adhesive connected to adhesive application systems.

Moreover, only highly specialized personnel are able to correctly operate complex and dangerous systems such as the burner system or adhesive system.

This involves further non-negligible costs and personnel availability problems.

The technical aim of the present invention is therefore to provide a process for manufacturing a multi-element sponge and a sponge produced thereby, which overcome the stated technical problems of the known art.

Within the scope of this aim, an object of the invention is to provide a low-cost process requiring the use of systems which are simpler compared with known processes.

Another object of the invention is to provide a process which does not require highly specialized personnel, hence limiting related problems of cost and personnel availability.

The technical aim, together with these and further objects, are attained according to the present invention by providing a process for manufacturing a multi-element sponge and a sponge produced thereby, in accordance with the accompanying claims.

Advantageously, the process of the invention enables sponges to be produced in which a product is incorporated to give them particular characteristics and to make them usable in particular sectors such as the medical or cosmetics sector.

For example the sponges can incorporate a medication, a soap, vitamins (in particular vitamin C) etc.

Further characteristics and advantages of the invention will be more apparent from the description of a preferred but non-exclusive embodiment of the process for manufacturing a multi-element sponge according to the invention, illustrated by way of non-limiting example in the accompanying drawings, in which:
Figure 1 shows a scheme of the process of the invention;
Figure 2 shows a first embodiment of the sponge of the invention;
Figures 3-5 show a second embodiment of the sponge of the invention; and
Figure 6 shows a third embodiment of the sponge of the invention.

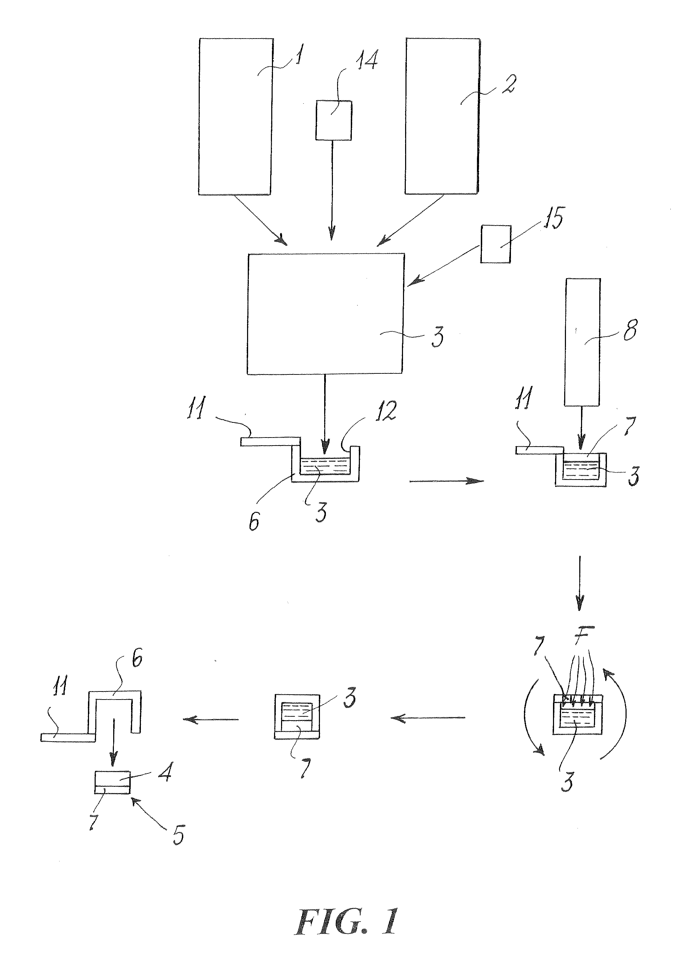

With reference to Figure 1, this shows a process for manufacturing a multi-element sponge (such as a cleaning implement).

The process consists of mixing a polymer 1 and a reagent 2 to form a mixture 3 made to expand (or be cured) to form a spongy mass 4 for the finished sponge 5 (if the mixture is cured but not made to expand, the mass may not be "spongy", however it will be hereinafter referred to as "spongy mass").

The formed mixture 3 is cast into a mould 6; an insert 7 is then deposited on the mixture 3 (contained in the mould 6); this is done within 10 minutes from casting the mixture 3 and preferably within 5 minutes from casting, to prevent the insert from hindering curing (i.e. expansion) of the mixture 3 and to obtain optimal connection between the spongy mass 4 (which forms as a result of the curing of the mixture) and the insert 7. For example the insert 7 can be feed by gravity by a feeder 8 and, in different embodiments, consists of abrasive fibres, elements (of natural or synthetic fibre, sponge, polyurethane, rubber, etc.) shaped to ensure good massaging and/or cleaning properties, powders of particle different sizes, fabric, flock, steel mesh, etc.

The mixture 3 is then left to expand for the required time, while maintaining the insert 7 pressed against the mixture 3.

During the expansion, which usually lasts less than 45 minutes and preferably about 30 minutes, the mixture forms the spongy mass 4.

In this manner, on termination of expansion, the insert 7 is directly connected to the spongy mass 4 without need for further flame treatment, gluing etc., and without need for the equipment to implement such treatment.

The mould 6 is provided with a counter-mould 11 provided with movable members which advance to press the insert 7 (the arrow F indicates the pressure exerted on the mixture 3), and withdraw to enable the mixture 3 to swell in order to form the spongy mass 4.

For example the movable members can be provided with a spring the thrust of which can be overcome by the expanding mixture.

Advantageously, after the counter-mould 11 has been closed onto the mould 6, the mould is rotated to bring the mixture 3 to the top and the insert 7 to the bottom.

This operation is preferably carried out at the commencement of the expansion stage but, in other examples, it can be carried out at least during a part of the expansion.

This fact (i.e. disposing the insert 7 at the bottom and the expanding mixture 3 above it) means that the mixture and insert are always kept in contact during the entire expansion, to facilitate copenetration of the two components (along their contacting surfaces) and ensure that they are properly joined together.

The mould 6 presents an aperture 12 which initially faces upwards, but which faces downwards after the mould has been rotated through 180 degrees after introducing the mixture and applying the insert.

The polymer comprises a hydrophilic prepolymer in a quantity of 30-65% by weight of the mixture.

Advantageously, the hydrophilic prepolymers react with water (making the product particularly suitable for contacting the skin) under ambient pressure and temperature conditions.

In particular, the hydrophilic prepolymer used is the product known commercially as Hypol of DOW.

The reagent consists of bacteriologically pure water, contained in the mixture in a quantity of 65-2% by weight.

The temperatures of the water and hydrophilic prepolymer are suitably set to 5-60°C on being mixed together.

Advantageously, surfactants 14 can be mixed into the mixture 3 in a quantity less than 15 % by weight and preferably less than 10% by weight of the mixture.

Finally, additives 25 to give predetermined characteristics to the finished sponge 5 are mixed into the mixture.

These additives 15 comprise perfume and/or soap and/or agents to make the finished sponge 5 soft and resilient, disinfectant, colouring, antioxidants, antimicrobics, vitamins, creams, oils, detergents, cosmetic and pharmacological substances, etc.

Modifications and variations are possible, for example casting can be done onto a conveyor belt; the conveyor belt can have a flat surface or be provided with projecting or recessed seats.

In a first embodiment of the process, casting can be continuous onto a flat belt, in order to form a strip of mixture to be expanded, and on which a ribbon-like insert or a plurality of smaller inserts are deposited. In a different embodiment casting onto the flat belt is discontinuous, to form a plurality of mounds of mixture to be expanded, on which the inserts are deposited.

In further embodiments, casting is continuous or discontinuous onto the belt provided with recessed or projecting seats defining strips or small mounds of mixture; the inserts are then deposited onto the mixture.

Two different embodiments of the sponge of the invention are described hereinafter.

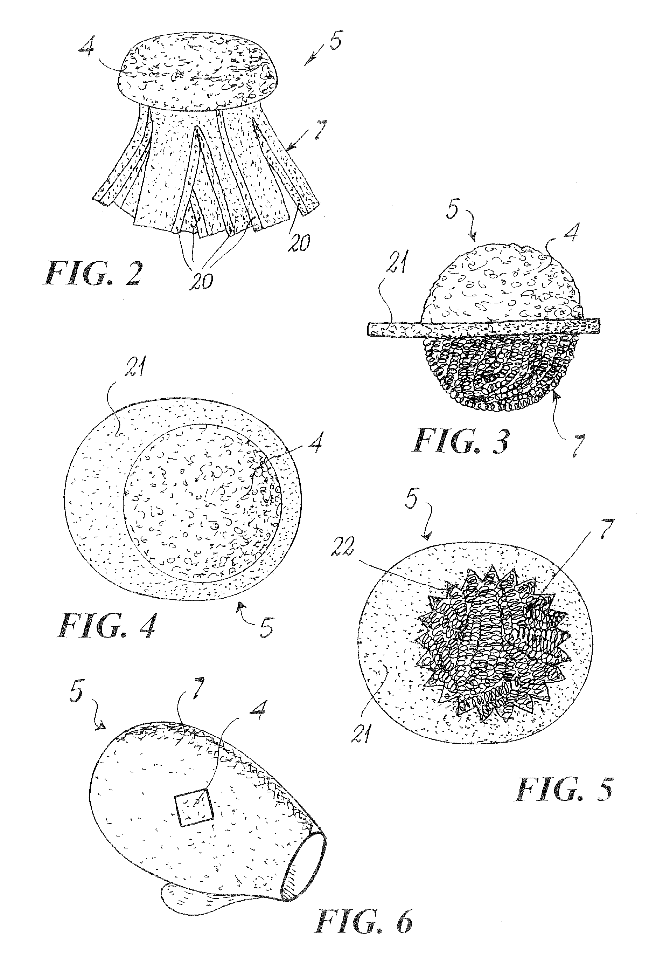

Figure 2 shows a finished sponge 5 provided with a cap-shaped spongy mass 4 of hydrophilic prepolymer.

The spongy mass of this shape is soft and enables the sponge to be gripped without the risk of ruining the hands or fingernails.

An insert 7 of abrasive or non-abrasive fibres is rigid with the spongy mass 4.

The abrasive fibres are in the form of a flat element provided with partial cuts 20 and folded about itself.

That end of the flat element not comprising cuts is embedded into the spongy mass 4, while the other end remains free.

This sponge can be used easily and safely (without the risk of ruining the hands or fingernails) by gripping the spongy mass 4 (which is soft) and using the fibres for cleaning; the spongy mass can also be used for cleaning if necessary.

Figure 2 shows in practice a cleaning implement comprising abrasive or non-abrasive fibres, in which the fibres are in the form of a flat element provided with partial cuts and folded about itself, the flat element being connected in that region without cuts to a support element.

Figures 3, 4 and 5 show a second embodiment of the sponge of the invention.

This sponge has a cap-shaped spongy mass 4 and is provided with a sponge disc 21 holed at 22 to bound the cap.

An insert of metal (steel, bronze or copper) or plastic mesh is embedded in the spongy mass 4 by passing it through the hole 22 so that it projects from the opposite side of the finished sponge 5.

As shown in Figure 5, the hole 22 presents a sawtooth-shaped inner edge; this enables the disc to expand without risk of breakage; in other examples the edge is circular, not sawtooth-shaped.

Figures 3-5 show in practice a cleaning implement comprising a cleaning mesh to which a support element is connected, a disc being provided connected to a free edge of the support element to protect the user's hands.

Figure 6 shows a third embodiment of a sponge produced by the process of the invention.

This figure shows the spongy mass 4 associated with an insert 7 consisting of a glove of fabric, fibre or equivalent material.

The finished sponge 5 is produced by firstly casting the mixture to be expanded, then positioning the glove insert on the mixture.

Preferably, after positioning the insert 7 on the mixture, the mould is rotated; rotation is preferably about 180 degrees, so that the spongy mass 4 presses on the insert 7 (i.e. the glove) at least for a part of the mixture expansion; alternatively the mould is not rotated.

It has been found that the process for manufacturing a multi-element sponge and the sponge produced thereby are particularly advantageous their implementation is much simpler and more economical than in the case of the traditional art.

The process for manufacturing a multi-element sponge and the sponge produced thereby are susceptible to numerous modifications and variants, all falling within the scope of the inventive concept; moreover all details can be replaced by technically equivalent elements.

## Claims

1. A process for manufacturing a multi-element sponge, **characterised by** consisting of mixing together a polymer (1) and a reagent (2) to form a mixture (3) to be expanded to produce a spongy mass (4), casting the mixture (3) in a mould (6), depositing an insert (7) onto said mixture (3) and allowing the mixture (3) to expand while maintaining the insert (7) in contact with it at least for a part of the expansion, so that on termination of expansion the insert (7) is directly connected to the spongy mass (4).

2. A process for manufacturing a multi-element cleaning implement, **characterised by** consisting of mixing together a polymer (1) and a reagent (2) to form a mixture (3) to be cured, casting the mixture (3) in a mould (6), depositing an insert (7) onto said mixture (3) and allowing the mixture (3) to cure while maintaining the insert (7) in contact with it at least for a part of the curing, so that on termination of curing the insert (7) is directly connected to the cured mixture (4).

3. A process as claimed in claim 1 or 2, **characterised in that** the mixture is cast into a mould (6).

4. A process as claimed in one or more of the preceding claims, **characterised in that**, after casting, said insert (7) and said mixture (3) are pressed one against the other.

5. A process as claimed in one or more of the preceding claims, **characterised in that** at least during a part of the expansion the insert (7) is disposed downwards and the expanding mixture (3) is disposed above it.

6. A process as claimed in one or more of the preceding claims, **characterised in that** the mould (6) presents an aperture (12) which initially faces upwards, said mould (6) being rotated after introduction of the mixture (3) and application of the insert (7).

7. A process as claimed in one or more of the preceding claims, **characterised in that** said mould (6) is rotated through about 180 degrees.

8. A process as claimed in one or more of the preceding claims, **characterised in that** said polymer comprises a hydrophilic prepolymer.

9. A process as claimed in one or more of the preceding claims, **characterised in that** said hydrophilic prepolymer is contained in a quantity of 30-65 % by weight of the mixture (3).

10. A process as claimed in one or more of the preceding claims, **characterised in that** said reagent is water.

11. A process as claimed in one or more of the preceding claims, **characterised in that** the water is contained in the mixture (3) in a quantity of 65-25% by weight.

12. A process as claimed in one or more of the preceding claims, **characterised in that** said water and said hydrophilic prepolymer have a temperature of 5-60°C when mixed together.

13. A process as claimed in one or more of the preceding claims, **characterised by** mixing surfactants (14) into the mixture (3) in a quantity less than 15 % by weight and preferably less than 10 % by weight of the mixture (3).

14. A process as claimed in one or more of the preceding claims, **characterised by** mixing into the mixture (3) additives (15) such as to give the finished sponge (5) predetermined characteristics.

15. A process as claimed in one or more of the preceding claims, **characterised in that** the insert (7) is deposited onto the mixture (3) within 10 minutes from casting the mixture (3) into the mould (6), and preferably within 5 minutes of casting.

16. A process as claimed in one or more of the preceding claims, **characterised in that** the expansion lasts less than 45 minutes, and preferably less than 30 minutes.

17. A process as claimed in one or more of the preceding claims, **characterised in that** the mixture is cast onto a conveyor belt presenting flat surfaces.

18. A process as claimed in one or more of the preceding claims, **characterised in that** the mixture is cast onto a conveyor belt presenting projecting or recessed seats.

19. A finished sponge (5) comprising a spongy mass (4) with which an insert (7) is rigid, **characterised by** being produced by a process claimed in one or more of claims 1-18.

20. A finished sponge (5) as claimed in claim 19, **characterised in that** said spongy mass is of cap shape.

21. A finished sponge (5) as claimed in one or more of claims 19 onwards, **characterised in that** said insert (7) comprises abrasive or non-abrasive fibres.

22. A finished sponge (5) as claimed in one or more of claims 19 onwards, **characterised in that** said abrasive or non-abrasive fibres consist of a flat element provided with partial cuts (20) and folded about itself.

23. A finished sponge (5) as claimed in one or more of claims 19 onwards, **characterised in that** said insert (7) is made of metal or plastic mesh.

24. A finished sponge (5) as claimed in one or more of claims 19 onwards, **characterised by** comprising a disc (21) connected to said spongy mass (4) and bounding said spongy mass (4).

25. A finished sponge (5) as claimed in one or more of claims 19 onwards, **characterised in that** said disc (21) is made of sponge and is holed (22), said insert passing through said hole (22) and projecting from the opposite side of the finished sponge (5).

26. A finished sponge (5) as claimed in one or more of claims 19 onwards, **characterised in that** said insert comprises a glove.

27. A finished sponge (5) as claimed in one or more of claims 19 onwards, **characterised in that** said spongy mass (4) contains additives (15) to give the finished sponge (5) predetermined characteristics.

28. A cleaning implement comprising a cleaning mesh to which a support element is connected, **characterised by** comprising a disc connected to a free edge of said support element and arranged to protect the user's hand.

29. A cleaning implement comprising abrasive or non-abrasive fibres, **characterised in that** said fibres consist of a flat element provided with partial cuts (20) and folded about itself, said flat element being connected **in that** region without cuts to a support element.
